# EUROPÄISCHE PATENTSCHRIFT

(11) **EP 3 523 077 B1**
(45) Veröffentlichungstag und Bekanntmachung des Hinweises auf die Patenterteilung: **30.08.2023**
(21) Anmeldenummer: 16777987.5
(22) Anmeldetag: 05.10.2016
(51) Int. Cl.: B25H 3/00

(54) **STAPELANORDNUNG**
STACKED MODULES
ENSEMBLE EMPILÉ

(43) Veröffentlichungstag der Anmeldung: 14.08.2019
(73) Patentinhaber: Festool GmbH, 73240 Wendlingen (DE)
(72) Erfinder: ENDER, Dominic Richard, 72622 Nürtingen (DE)
(74) Vertreter: Patentanwälte Magenbauer & Kollegen Partnerschaft mbB
(86) Internationale Anmeldenummer: PCT/EP2016/073743
(87) Internationale Veröffentlichungsnummer: WO 2018/065042

(56) Entgegenhaltungen:
- EP-A1- 1 516 703
- EP-B1- 2 315 701
- DE-U1-202004 009 123
- US-A1- 2010 116 261
- US-B1- 6 494 198
- US-B1- 9 403 224

## Beschreibung

Die Erfindung betrifft eine Stapelanordnung, umfassend eine transportable Bearbeitungseinheit, insbesondere eine Tischkreissäge, zur Bearbeitung eines Werkstücks mit einem Werkzeug, sowie mindestens einen kastenförmigen Körper, der auf oder unter der transportablen Bearbeitungseinheit angeordnet ist, um zusammen mit der transportablen Bearbeitungseinheit einen vertikalen Stapel zu bilden, wobei die transportable Bearbeitungseinheit eine auf einer Unterlage abstellbare kastenförmige Stützstruktur mit einem Unterteil umfasst, das über eine zum Auflegen des zu bearbeitenden Werkstücks nutzbare Werkstück-Auflageplatte verfügt, sowie eine Antriebseinrichtung zum maschinellen Antrieb des Werkzeugs, die zumindest teilweise in dem Unterteil angeordnet und daran betriebsbereit befestigt ist, so dass die Antriebseinrichtung bei der Bearbeitung des Werkstücks durch das von der Antriebseinrichtung angetriebene Werkzeug zumindest teilweise in dem Unterteil verbleibt.

Die DE 20 2004 009 123 U1 beschreibt eine Tischkreissäge mit einem Gehäuse, das umfangseitig und unterseitig mit im wesentlichen geschlossenen Außenflächen versehen ist. Das Gehäuse trägt eine Arbeitsplatte mit einer Auflagefläche. Ein Maschinenrahmen zur Aufnahme eines Motors und eines Sägeblatts ist unterhalb der Arbeitsplatte angeordnet.

Die US 6 494 198 B1 betrifft eine Steinschneidemaschine. Die Steinschneidemaschine verfügt über ein rechteckiges Gehäuse. In dem rechteckigen Gehäuse ist ein Motorraum vorgesehen, in den von unten eine untere Abdeckung mit einem Motor eingefügt werden kann. Es offenbart folgende Merkmale des Anspruches 1: Eine transportable Bearbeitungseinheit zur Bearbeitung eines Werkstücks mit einem Werkzeug, umfassend eine auf einer Unterlage abstellbare kastenförmige Stützstruktur mit einem Unterteil, das über eine zum Auflegen des zu bearbeitenden Werkstücks nutzbare Werkstück-Auflageplatte verfügt, sowie eine Antriebseinrichtung zum maschinellen Antrieb des Werkzeugs, die zumindest teilweise in dem Unterteil angeordnet und daran betriebsbereit befestigt ist, so dass die Antriebseinrichtung bei der Bearbeitung des Werkstücks durch das von der Antriebseinrichtung angetriebene Werkzeug zumindest teilweise in dem Unterteil verbleibt.

Die EP 1 516 703 A1 beschreibt einen stapelbaren Werkzeugkoffer, der an seinem Unterteil einen Verbindungsriegel aufweist, der dafür vorgesehen ist, am Deckel eines darunterliegenden Werkzeugkoffers anzugreifen um die beiden Werkzeugkoffer miteinander zu verbinden.

Die EP 2 315 701 B1 beschreibt aufeinander stapelbare Behälter mit Kopplungsmitteln zur Bereitstellung einer lösbaren, vertikal zugfesten Kopplung.

Eine Aufgabe der Erfindung besteht darin, die Handhabbarkeit einer transportablen Bearbeitungseinheit der eingangs genannten Art zu verbessern.

Diese Aufgabe wird durch die Stapelanordnung gemäß Anspruch 1 gelöst. Erfindungsgemäß verfügt die Stützstruktur über Stützstruktur-Kopplungsmittel, die eine lösbare, vertikal zugfeste Kopplung mit dem wenigstens einen kastenförmigen Körper bereitstellen. Der kastenförmige Körper weist Körper-Kopplungsmittel auf, die mit den Stützstruktur-Kopplungsmitteln zusammenwirken, um die lösbare, vertikal zugefeste Kopplung zwischen dem kastenförmigen Körper (und der transportablen Bearbeitungseinheit bereitzustellen.

Dadurch, dass die transportable Bearbeitungseinheit über die Stützstruktur-Kopplungsmittel verfügt, kann sie stabil in den vertikalen Stapel aus kastenförmigen Körpern, wie beispielsweise kastenförmigen Behältern und/oder weiteren transportablen Bearbeitungseinheiten, untergebracht werden. Die transportable Bearbeitungseinheit kann folglich in sehr praktischer Weise aufbewahrt bzw. verstaut werden.

Zudem kann die transportable Bearbeitungseinheit aufgrund der Stützstruktur-Kopplungsmittel in effizienter und sicherer Weise transportiert werden. Da die Stützstruktur-Kopplungsmittel für eine vertikal zugfeste Kopplung geeignet sind, kann mit der transportablen Bearbeitungseinheit ein Stapel gebildet werden, dessen einzelne Stapelelemente vertikal zugfest miteinander gekoppelt sind. Mit einer vertikal zugfesten Kopplung ist in diesem Zusammenhang insbesondere eine in vertikaler Richtung feste und kraftübertragende Verbindung gemeint. Die in einem solchen Stapel untergebrachte transportable Bearbeitungseinheit bleibt auch beim vertikalen Anheben des Stapels fest an die weiteren Elemente des Stapels gekoppelt und kann folglich in effizienter und sicherer Weise im Stapel transportiert werden.

Erfindungsgemäß kann somit die Handhabbarkeit der transportablen Bearbeitungseinheit, insbesondere in Bezug auf Verstauung und Transport der transportablen Bearbeitungseinheit, verbessert werden.

Die Grundgestalt der transportablen Bearbeitungseinheit wird insbesondere durch die kastenförmige Stützstruktur definiert. Vorzugsweise stellen die Außenflächen der Stützstruktur das Gehäuse bzw. die äußeren Gehäuseflächen der transportablen Bearbeitungseinheit dar. Das Gehäuse bzw. die Grundgestalt der transportablen Bearbeitungseinheit weist insbesondere die Form einer Systemkiste auf. Systemkisten eines Systems verfügen über eine in dem System definierte Grundfläche und weisen in dem System definierte Kopplungsmittel auf, so dass Systemkisten eines Systems zu einem stabilen Stapel zusammengesetzt werden können. Systemkisten sind beispielsweise als modulare Werkzeugkästen zur Aufbewahrung von handgeführtem Elektrowerkzeug, Zubehör und/oder Verbrauchmaterialen weit verbreitet. Ist die Grundgestalt bzw. das Gehäuse der erfindungsgemäßen Bearbeitungseinheit in der Form einer Systemkiste ausgebildet, so kann die transportable Bearbeitungseinheit in praktischer Weise in einem Stapel aus Systemkisten verstaut und transportiert werden.

Die Stützstruktur der transportablen Bearbeitungseinheit erfüllt mehrere Zwecke. Zum einen definiert sie, wie vorstehend bereits erläutert, die Grundgestalt der transportablen Bearbeitungseinheit und ist dabei derart ausgebildet, dass die Aufbewahrung bzw. der Transport der transportablen Bearbeitungseinheit in einem Stapel aus weiteren kastenförmigen Körpern bzw. transportablen Bearbeitungseinheiten möglich ist. Zum anderen stellt die Stützstruktur die Werkstück-Auflageplatte bereit, auf der das Werkstück bei der Bearbeitung aufgelegt wird. Schließlich ist in der Stützstruktur die Antriebseinrichtung, beispielsweise ein Elektromotor, betriebsbereit untergebracht und befestigt, so dass die transportable Bearbeitungseinheit zweckmäßigerweise ohne Umbau der Antriebseinrichtung aus einem Stapel genommen und in Betrieb genommen bzw. nach dem Betrieb in einem Stapel untergebracht werden kann. Die Antriebseinrichtung verbleibt dabei stets in betriebsbereiter Anordnung in der Stützstruktur. Insbesondere verbleibt die Antriebseinrichtung sowohl in einem Betriebszustand - also einem Zustand, in dem die transportable Bearbeitungseinheit zur Bearbeitung eines Werkstücks verwendet werden kann - als auch in einem Transportzustand - also einem Zustand, in dem die transportable Bearbeitungseinheit in einem Stapel untergebracht werden kann - in betriebsbereiter Anordnung in der Stützstruktur. Zwischen Transportzustand und Betriebszustand sind daher keine aufwändigen Umbauten erforderlich, so dass die transportable Bearbeitungseinheit recht schnell und einfach in Betrieb genommen werden kann.

Wie vorstehend bereits erwähnt, kann die transportable Bearbeitungseinheit aufgrund der Stützstruktur-Kopplungsmittel in einem Stapel aus kastenförmigen Körpern untergebracht werden. Bei den kastenförmigen Körpern kann es sich beispielsweise um Behälter oder um erfindungsgemäße transportable Bearbeitungseinheiten handeln. Kastenförmige Körper, die zusammen einen Stapel bilden, werden hier auch als Stapelelemente bezeichnet.

Vorteilhafte Weiterbildungen sind Gegenstand der Unteransprüche.

Vorzugsweise umfassen die Stützstruktur-Kopplungsmittel obere Stützstruktur-Kopplungsmittel, die dazu geeignet sind, in einem Zustand, in dem ein kastenförmiger Körper auf die transportable Bearbeitungseinheit gestapelt ist, eine lösbare, vertikal zugfeste Kopplung mit dem kastenförmigen Körper bereitzustellen. Alternativ oder zusätzlich dazu umfassen die Stützstruktur-Kopplungsmittel untere Stützstruktur-Kopplungsmittel, die dazu geeignet sind, in einem Zustand, in dem die transportable Bearbeitungseinheit auf einen kastenförmigen Körper gestapelt ist, eine lösbare, vertikal zugefeste Kopplung mit dem kastenförmigen Körper bereitzustellen.

Die transportable Bearbeitungseinheit kann folglich in einem Stapel stabil auf und/oder unter einen kastenförmigen Körper angeordnet und an diesen vertikal zugfest gekoppelt werden. Vorzugsweise sind die Stützstruktur-Kopplungsmittel dazu geeignet, eine in mehrere, insbesondere sämtliche Raumrichtungen zugfeste Kopplung bereitzustellen.

Die Stützstruktur-Kopplungselemente sind insbesondere derart ausgebildet, dass sie eine Kopplung mit zu den Stützstruktur-Kopplungselementen identisch ausgebildeten Körper-Kopplungsmitteln eines kastenförmigen Körpers eingehen können, wenn der kastenförmige Körper auf oder unter der transportablen Bearbeitungseinheit angeordnet ist und mit dieser einen Stapel bildet.

Gemäß einer bevorzugten Ausgestaltung umfassen die Stützstruktur-Kopplungsmittel, vorzugsweise die oberen Stützstruktur-Kopplungsmittel, ein beweglich gelagertes Verriegelungselement, das insbesondere einen an der Stützstruktur drehbar gelagerten Drehriegel umfasst. Zweckmäßigerweise verläuft die Drehachse orthogonal zu derjenigen Umfangswand der Stützstruktur, an der der Drehriegel angeordnet ist.

Das Verriegelungselement kann beispielsweise beweglich gelagert sein und derart angeordnet sein, dass es mit einer an einem kastenförmigen Körper vorgesehenen Verriegelungsankerkontur bei Einnahme einer Koppelstellung in Kopplungseingriff gebracht werden kann, wenn der kastenförmige Körper auf oder unter der transportablen Bearbeitungseinheit angeordnet ist. Vorzugsweise ist das Verriegelungselement an einer Umfangswand der transportablen Bearbeitungseinheit angebracht.

Die Stützstruktur-Kopplungsmittel können ein oder mehrere Verriegelungselemente umfassen.

Das Verriegelungselement kann verschiedenartig beweglich gelagert sein, beispielsweise drehbar, schwenkbar oder verschiebbar. Alternativ oder zusätzlich zu der bereits erwähnten Variante des Verriegelungselements als Drehriegel kann das Verriegelungselement auch eine Verriegelungslasche umfassen, die schwenkbeweglich oder verschiebbar gelagert ist. Die Schwenkachse verläuft in diesem Fall zweckmäßigerweise parallel zu derjenigen Umfangswand der transportablen Bearbeitungseinheit, an der die Verriegelungslasche angeordnet ist. Die Schiebeachse bei der verschiebbaren Lagerung verläuft zweckmäßigerweise in vertikaler Richtung.

Mit einem beweglich gelagerten Verriegelungselement kann die transportable Bearbeitungseinheit in besonders einfacher Weise an den kastenförmigen Körper gekoppelt bzw. von diesem entkoppelt werden. Ist das Verriegelungselement als drehbar gelagerter Drehriegel ausgebildet, so ist ein Koppeln/Entkoppeln durch Drehen des Drehriegels möglich.

Die Stützstruktur-Kopplungsmittel, vorzugsweise die unteren Stützstruktur-Kopplungsmittel, umfassen zweckmäßigerweise wenigstens eine an der Stützstruktur ortsfest angeordnete Verriegelungsankerkontur.

Die Verriegelungsankerkontur kann beispielsweise als wenigstens ein Verriegelungsvorsprung ausgebildet sein, der von einer Umfangswand der transportablen Bearbeitungseinheit absteht. Die Stützstruktur-Kopplungsmittel können eine oder mehrere Verriegelungsankerkonturen bzw. Verriegelungsvorsprünge umfassen.

Zusätzlich zu dem vorstehend diskutierten Verriegelungselement und der Verriegelungsankerkontur können die Stützstruktur-Kopplungsmittel Eingriffsstrukturen aufweisen, die dazu geeignet sind, mit entsprechenden Eingriffsstrukturen eines kastenförmigen Körpers, wie beispielsweise eines Behälters oder einer weiteren transportablen Bearbeitungseinheit, in Eingriff zu stehen.

Auf diese Weise kann in einem Zustand, in dem die transportable Bearbeitungseinheit zusammen mit dem kastenförmigen Körper einen Stapel bildet, erzielt werden, dass die transportable Bearbeitungseinheit und der kastenförmige Körper in Richtung senkrecht zur Vertikalrichtung relativ zueinander verschiebegesichert sind.

Ferner können die Eingriffsstrukturen auch zur Kopplung in vertikaler Richtung beitragen. Dies kann durch einen verriegelnden Eingriff von Hintergreifbestandteilen der Eingriffsstrukturen geschehen, wobei der verriegelnde Eingriff durch eine Relativbewegung der transportablen Bearbeitungseinheit zu dem kastenförmigen Körper hergestellt werden kann.

Vorzugsweise umfassen die oberen Stützstruktur-Kopplungsmittel eine an einer Oberseite der Stützstruktur angeordnete erste Eingriffsstruktur aus wenigstens einer Eingriffsvertiefung und die unteren Stützstruktur-Kopplungsmittel umfassen eine an einer Unterseite der Stützstruktur angeordnete zweite Eingriffsstruktur aus wenigstens einem Eingriffsvorsprung. Der wenigstens eine Eingriffsvorsprung kann beispielsweise als Standfuß ausgebildet sein. Zweckmäßigerweise bildet der wenigstens eine Standfuß zumindest teilweise auch die vorstehend diskutierten Hintergreifbestandteile.

Gemäß einer bevorzugten Ausgestaltung umfasst die Stützstruktur ein abnehmbar an dem Unterteil angebrachtes Oberteil mit einer sich in vertikaler Richtung über die Werkstück-Auflageplatte nach oben erstreckenden Rahmenstruktur.

Die Rahmenstruktur definiert zusammen mit der Werkstück-Auflageplatte einen Stauraum und stellt somit eine Aufbewahrungsmöglichkeit für Zubehör bereit. Im Betriebszustand der transportablen Bearbeitungseinheit kann das Oberteil von dem Unterteil abgenommen werden, um die Werkstück-Auflageplatte und das Werkzeug besser zugänglich zu machen. Im Transportzustand der transportablen Bearbeitungseinheit ist das Oberteil an dem Unterteil angebracht, um den Stauraum bereitzustellen.

Gemäß einer möglichen Ausführungsform stellt die Rahmenstruktur das Oberteil dar.

Zweckmäßigerweise sind an dem Oberteil Oberteil-Kopplungsmittel und an dem Unterteil Unterteil-Kopplungsmittel vorgesehen, die miteinander in Kopplungseingriff gebracht werden können, um eine vertikal zugfeste Kopplung zwischen Oberteil und Unterteil bereitzustellen. Die Oberteil-Kopplungsmittel und die Unterteil-Kopplungsmittel umfassen beispielsweise ein bewegliches Verriegelungselement und/oder eine Verriegelungsankerkontur.

Vorzugsweise weist der horizontale Querschnitt des Oberteils, vorzugsweise der horizontale Querschnitt der Rahmenstruktur, im Wesentlichen die gleiche Außenkontur wie der horizontale Querschnitt des Unterteils auf. Oberteil und Unterteil bzw. Rahmenstruktur und Unterteil bilden zusammen einen kastenförmigen Körper.

Zweckmäßigerweise ist das Werkzeug an der Antriebseinrichtung angebracht und zumindest teilweise oberhalb der Werkstück-Auflageplatte angeordnet. Vorzugsweise erstreckt sich die Rahmenstruktur in vertikaler Richtung nach oben über das an der Antriebseinrichtung angebrachte Werkzeug hinaus.

Dadurch, dass sich die Rahmenstruktur in vertikaler Richtung nach oben über das an der Antriebseinrichtung angebrachte Werkzeug hinaus erstreckt, kann die transportable Bearbeitungseinheit in einem Stapel unter einem kastenförmigen Körper angeordnet werden, ohne dass dafür das Werkzeug abgenommen werden muss. Die Rahmenstruktur dient insbesondere dazu, in vertikaler Richtung den nötigen Raum zu schaffen, um das zumindest teilweise oberhalb der Werkstück-Auflageplatte angeordnete Werkzeug auch im Transportzustand an der Antriebseinrichtung belassen zu können. Auf diese Weise kann das Werkzeug auch im Transportzustand betriebsbereit angeordnet bleiben.

Die oberen Stützstruktur-Kopplungsmittel sind insbesondere an dem Oberteil vorgesehen. Alternativ oder zusätzlich dazu sind die unteren Stützstruktur-Kopplungsmittel an dem Unterteil vorgesehen.

Gemäß einer bevorzugten Ausgestaltung ist das Oberteil als haubenförmige Abdeckung ausgebildet, das in einem an der Stützstruktur angebrachten Zustand die Werkzeug-Auflageplatte abdeckt.

Vorzugsweise begrenzen die Rahmenstruktur und die Werkzeug-Auflagefläche zusammen einen Stauraum. Insbesondere verfügt das Oberteil über einen abnehmbaren und/oder verschwenkbaren Deckel, der an der Rahmenstruktur angebracht ist und der in einer Offenstellung einen Zugang zu dem Stauraum freigibt.

Zweckmäßigerweise verfügt die transportable Bearbeitungseinheit über einen Tragegriff, der an der Stützstruktur, vorzugsweise am Oberteil, insbesondere am Deckel, vorgesehen ist. Die Stützstruktur ist insbesondere derart ausgebildet, dass sich die transportable Bearbeitungseinheit mit dem Tragegriff tragen lässt.

Gemäß einer bevorzugten Ausgestaltung ist der kastenförmige Körper ein Behälter oder eine weitere Bearbeitungseinheit gemäß der vorstehend beschriebenen Art. Im letzteren Fall stellen die Körper-Kopplungsmittel die Stützstruktur-Kopplungsmittel dar.

Vorzugsweise weist der horizontale Querschnitt der transportablen Bearbeitungseinheit im Wesentlichen die gleiche Außenkontur wie der horizontale Querschnitt des kastenförmige Körpers auf. Insbesondere ist die transportable Bearbeitungseinheit fluchtend zu dem kastenförmigen Körper angeordnet, so dass die transportable Bearbeitungseinheit und der kastenförmige Körper zusammen einen quaderförmigen Stapel bilden.

Nachfolgend wird eine exemplarische Ausführungsform einer transportablen Bearbeitungseinheit unter Bezugnahme auf die Zeichnung erläutert. Dabei zeigt
- Figur 1: eine perspektivische Darstellung einer transportablen Bearbeitungseinheit;
- Figur 2: eine perspektivische Darstellung der transportablen Bearbeitungseinheit mit abgenommenem Oberteil von vorne;
- Figur 3: eine perspektivische Darstellung der transportablen Bearbeitungseinheit mit abgenommenem Oberteil von hinten;
- Figur 4: eine perspektivische Darstellung der transportablen Bearbeitungseinheit mit geöffnetem Deckel;
- Figur 5: eine perspektivische Darstellung einer Stapelanordnung aus der transportablen Bearbeitungseinheit und zwei kastenförmigen Behältern;
- Figur 6: eine perspektivische Darstellung der transportablen Bearbeitungseinheit von unten;
- Figur 7: ein schematisches Blockdiagramm einer Steuereinrichtung 101.

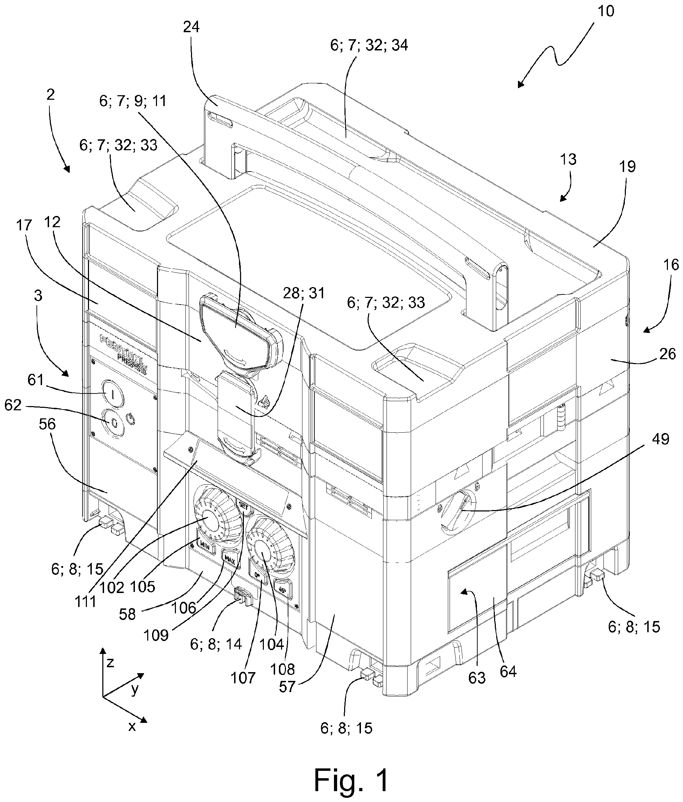

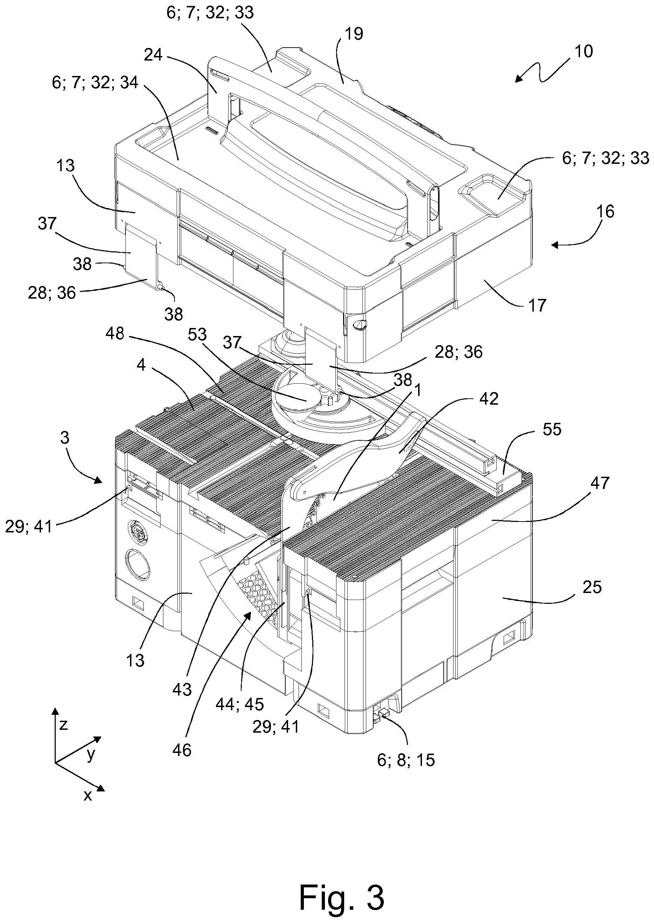

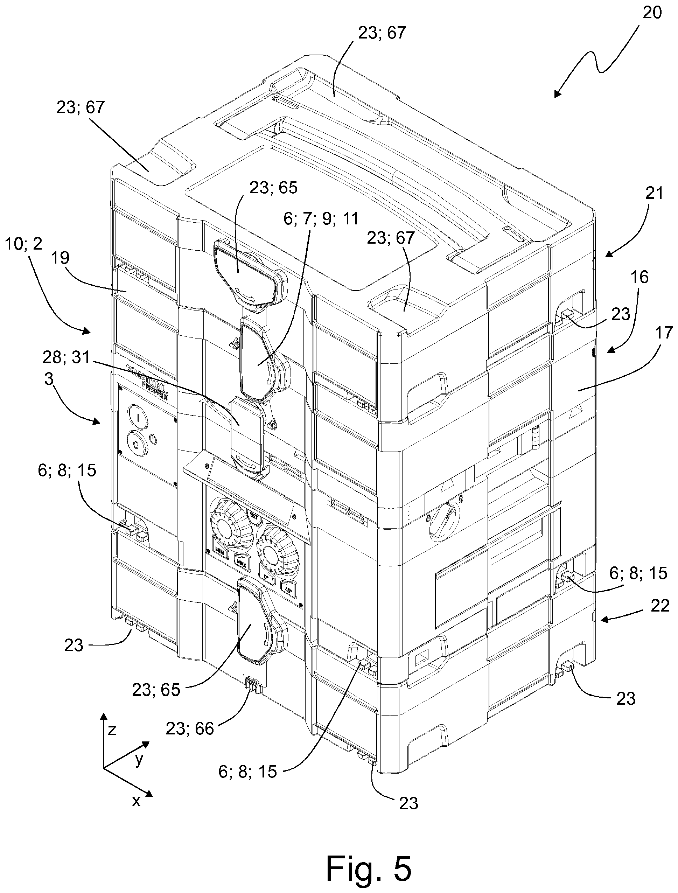

Die Figuren 1 bis 4 und 6 zeigen perspektivische Darstellungen einer transportablen Bearbeitungseinheit 10. Die Figur 5 zeigt eine Stapelanordnung 20, in der die transportable Bearbeitungseinheit 10 untergebracht ist.

Die transportable Bearbeitungseinheit 10 erstreckt sich in eine Vertikalrichtung, die parallel zu der in den Figuren eingezeichneten z-Achse verläuft, in eine Längsrichtung, die parallel zu der in den Figuren eingezeichneten x-Achse verläuft, und in eine Querrichtung, die parallel zu der in den Figuren eingezeichneten y-Achse verläuft. Die x-Achse, y-Achse und z-Achse sind orthogonal zueinander ausgerichtet.

Die transportable Bearbeitungseinheit 10 ist in den gezeigten Figuren exemplarisch als Tischkreissäge ausgebildet. Alternativ dazu kann die transportable Bearbeitungseinheit 10 auch als eine andere halbstationäre Maschine, wie beispielsweise eine Oberfräse, Dekupiersäge oder ein Kantenschleifer, ausgebildet sein. Als halbstationäre Maschine soll in diesem Zusammenhang insbesondere eine Bearbeitungseinheit bezeichnet werden, die bei der Werkstückbearbeitung auf einer Unterlage abgestellt wird und die dazu geeignet ist, beim Transport von einer Person getragen zu werden.

Die transportable Bearbeitungseinheit 10 dient der Bearbeitung eines in den Figuren nicht gezeigten Werkstücks mit einem Werkzeug 1. Das Werkzeug 1 ist in den Figuren exemplarisch als Sägeblatt ausgebildet.

Die transportable Bearbeitungseinheit 10 umfasst eine auf einer Unterlage abstellbare kastenförmige Stützstruktur 2 mit einem Unterteil 3, das über eine zum Auflegen des zu bearbeitenden Werkstücks nutzbare Werkstück-Auflageplatte 4 verfügt. Bei der kastenförmigen Stützstruktur 2 handelt es sich zweckmäßigerweise um eine im Wesentlichen quaderförmige Struktur, bei der die Außenflächen, vorzugsweise sämtliche Außenflächen, im Wesentlichen geschlossen sind.

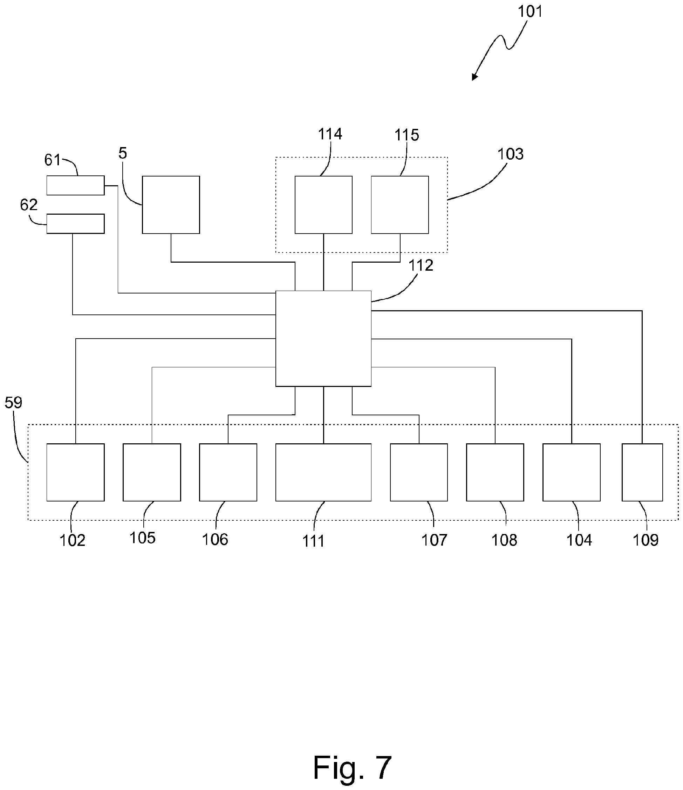

Ferner umfasst die transportable Bearbeitungseinheit 10 eine Antriebseinrichtung 5, die in der Figur 7 schematisch gezeigt ist. Die Antriebseinrichtung 5 umfasst beispielsweise einen Elektromotor zum maschinellen Antrieb des Werkzeugs 1. Die Antriebseinrichtung 5 ist im diskutierten Beispiel vollständig in dem Unterteil 3 angeordnet und an dem Unterteil 3 betriebsbereit befestigt, so dass die Antriebseinrichtung 5 bei der Bearbeitung des Werkstücks durch das von der Antriebseinrichtung 5 angetriebene Werkzeug 1 im Unterteil 3 verbleibt.

Die Stützstruktur 2 verfügt über Stützstruktur-Kopplungsmittel 6. Die Stützstruktur-Kopplungsmittel 6 sind dazu geeignet, in einem Zustand, in dem die Stützstruktur 2 zusammen mit wenigstens einem kastenförmigen Körper 21, 22 einen vertikalen Stapel bildet, eine lösbare, vertikal zugfeste Kopplung mit dem wenigstens einen kastenförmigen Körper bereitzustellen.

Die transportable Bearbeitungseinheit 10 kann aufgrund der Stützstruktur-Kopplungsmittel 6 stabil in einem Stapel aus kastenförmigen Körpern 21, 22, wie beispielsweise kastenförmigen Behältern und/oder weiteren transportablen Bearbeitungseinheiten 10 untergebracht werden. Die transportable Bearbeitungseinheit 10 kann daher im Stapel sehr praktisch verstaut und/oder sicher transportiert werden. Die erfindungsgemäße transportable Bearbeitungseinheit 10 weist somit eine verbesserte Handhabbarkeit auf.

Wie in den Figuren zu sehen ist, weist die transportable Bearbeitungseinheit 10 insbesondere die Grundgestalt einer Systemkiste auf. Die in den Figuren gezeigte transportable Bearbeitungseinheit 10 ist ausgebildet, in einem Stapel von weiteren Systemkisten untergebracht zu werden, wie dies beispielsweise in der Figur 5 gezeigt ist.

Nachstehend werden beispielhafte Konfigurationen der transportablen Bearbeitungseinheit 10 im Detail erläutert.

Die Stützstruktur 2 ist kastenförmig ausgebildet und weist vier orthogonal zueinander ausgerichtete Umfangswände auf. Die Umfangswände umfassen eine Vorderwand 12, eine Rückwand 13, sowie Seitenwände 25 und 26. Die Vorderwand 12 und die Rückwand 13 sind parallel zu der Längsrichtung x ausgerichtet, und die Seitenwände 25, 26 sind parallel zu der Querrichtung y ausgerichtet.

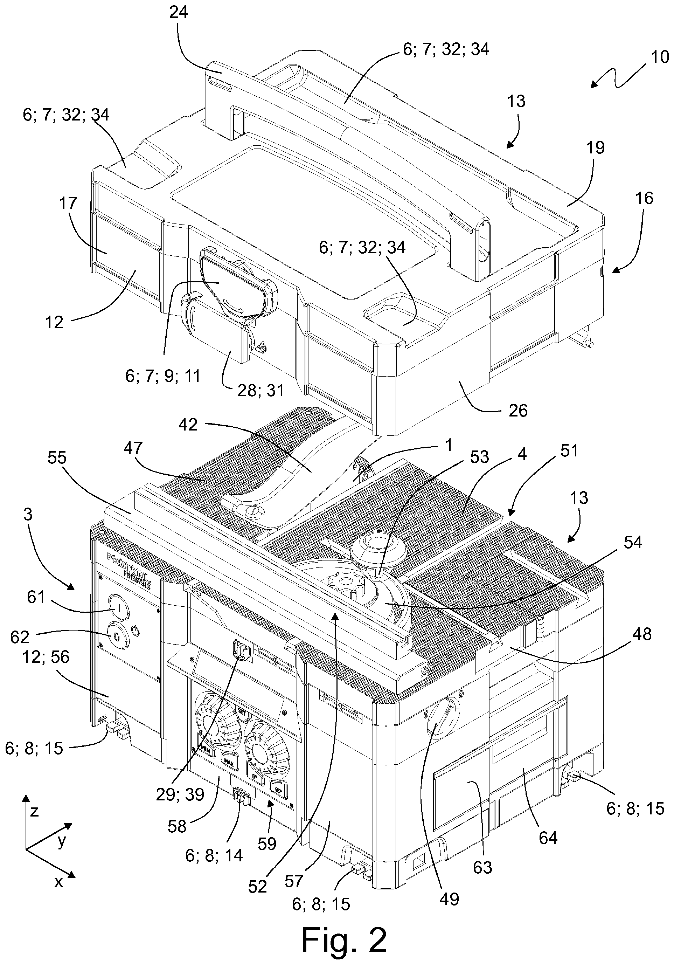

Die Stützstruktur 2 der in den Figuren gezeigten transportablen Bearbeitungseinheit 10 weist ein abnehmbar an dem Unterteil 3 angebrachtes Oberteil 16 auf. Die Figur 1 zeigt die Bearbeitungseinheit 10 in einem Zustand, in dem das Oberteil 16 auf das Unterteil 3 aufgesetzt und an dieses angekoppelt ist. In der Figur 2 ist die transportable Bearbeitungseinheit 10 in einem Zustand gezeigt, in dem das Oberteil 16 von dem Unterteil 3 abgenommen ist.

Alternativ zu der gezeigten Ausführungsform kann die transportable Bearbeitungseinheit 10 auch ohne Oberteil 16 ausgebildet sein. In diesem Fall kann zweckmäßigerweise das Unterteil 3 die gesamte Stützstruktur darstellen. Die Stützstruktur-Kopplungsmittel 6 können dann allesamt am Unterteil 3 vorgesehen sein.

Die Stützstruktur-Kopplungsmittel 6 umfassen obere Stützstruktur-Kopplungsmittel 7, die exemplarisch an dem Oberteil 16 vorgesehen sind. Die oberen Stützstruktur-Kopplungsmittel 7 sind dazu geeignet, in einem Zustand, in dem ein kastenförmiger Körper 21 auf die transportable Bearbeitungseinheit 10 gestapelt ist, eine lösbare, vertikal zugfeste Kopplung mit dem kastenförmigen Körper 21 bereitzustellen. Die oberen Stützstruktur-Kopplungsmittel 7 umfassen ein beweglich gelagertes Verriegelungselement 9. Im gezeigten Beispiel umfasst das Verriegelungselement 9 einen an der Stützstruktur 2 drehbar gelagerten Drehriegel 11. Der Drehriegel 11 ist an der Vorderwand 12 der Stützstruktur 2 angeordnet. Die Drehachse des Drehriegels 11 verläuft orthogonal zu der Vorderwand 12.

Die Stützstruktur-Kopplungsmittel 6 umfassen ferner untere Stützstruktur-Kopplungsmittel 8, die an dem Unterteil 3 vorgesehen sind. Die unteren Stützstruktur-Kopplungsmittel 8 sind dazu geeignet, in einem Zustand, in dem die transportable Bearbeitungseinheit 10 auf einen kastenförmigen Körper 22 gestapelt ist, eine lösbare, vertikal zugefeste Kopplung mit dem kastenförmigen Körper 22 bereitzustellen. Die unteren Stützstruktur-Kopplungsmittel 8 umfassen wenigstens eine an der Stützstruktur 2 ortsfest angeordnete erste Verriegelungsankerkontur 14. Im gezeigten Beispiel ist die erste Verriegelungsankerkontur 14 am Unterteil 3 der Stützstruktur 2 angeordnet. Die erste Verriegelungsankerkontur 14 befindet sich an der Vorderwand 12 der Stützstruktur 2 und ist in Bezug auf die Längsrichtung x mittig an der Stützstruktur 2 angeordnet. Die erste Verriegelungsankerkontur 14 ist als Verriegelungsvorsprung ausgebildet und steht von der Vorderwand 12 ab.

Das Verriegelungselement 9 und die erste Verriegelungsankerkontur 14 sind derart angeordnet, dass bei zwei vertikal übereinander gestapelten transportablen Bearbeitungseinheiten 10 das Verriegelungselement 9 der einen transportablen Bearbeitungseinheit 10 in Kopplungseingriff mit der ersten Verriegelungsankerkontur 14 der anderen Bearbeitungseinheit 10 gebracht werden kann.

Im gezeigten Beispiel weisen die unteren Stützstruktur-Kopplungsmittel 8 zusätzlich zu der ersten Verriegelungsankerkontur 14 auch noch zweite Verriegelungsankerkonturen 15 auf. Die zweiten Verriegelungsankerkonturen 15 sind auch als Verriegelungsvorsprünge ausgebildet, sind im Gegensatz zur ersten Verriegelungsankerkontur 14 jedoch in den unteren Eckbereichen der Vorderwand 12 sowie in den unteren, an der Rückwand 13 gelegenen Eckbereichen der Seitenwände 25 und 26 angeordnet. Die zweiten Verriegelungsankerkonturen 15 dienen dazu, die transportable Bearbeitungseinheit 10 an Behälter oder andere Gegenstände anzukoppeln, die über zu den zweiten Verriegelungsankerkonturen 15 komplementäre Verriegelungselemente verfügen. Sofern nicht vorgesehen ist, dass die transportable Bearbeitungseinheit 10 auch an derartige Behälter bzw. Gegenstände gekoppelt werden soll, kann auf die zweiten Verriegelungsankerkonturen 15 auch verzichtet werden.

Die Stützstruktur-Kopplungsmittel 6 umfassen ferner Eingriffsstrukturen der eingangs erwähnten Art.

So umfassen die oberen Stützstruktur-Kopplungsmittel 7 ferner eine Mehrzahl von an der Oberseite der Stützstruktur 2 verteilt angeordneten Eingriffsvertiefungen 32. Die Eingriffsvertiefungen 32 umfassen zwei in der Nähe der Vorderwand 12 angeordnete erste Eingriffsvertiefungen 33 sowie eine in der Nähe der Rückwand 13 angeordnete zweite Eingriffsvertiefung 34.

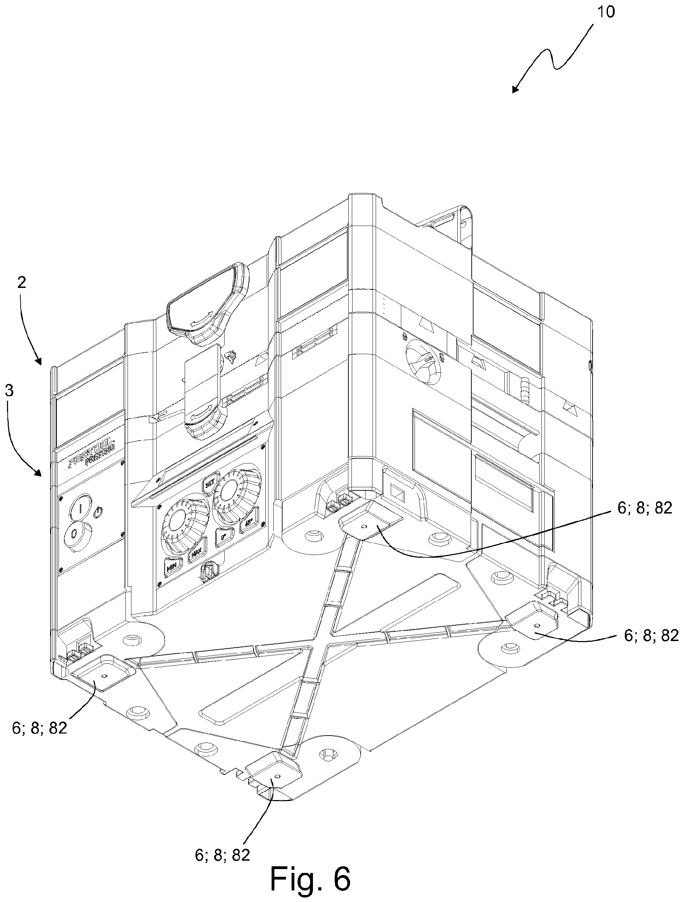

Die unteren Stützstruktur-Kopplungsmittel 8 umfassen vier als Standfüße ausgebildete Eingriffsvorsprünge 82, die in den vier Eckbereichen der Unterseite der Stützstruktur 2 angeordnet sind. Die Eingriffsvorsprünge 82 sind beispielsweise in der Figur 6 zu sehen. Die Eingriffsvorsprünge 82 und die Eingriffsvertiefungen 33, 34 sind derart angeordnet, dass bei zwei vertikal übereinander gestapelten transportablen Bearbeitungseinheiten 10 die Eingriffsvorsprünge 82 der oberen transportablen Bearbeitungseinheit mit den Eingriffsvertiefungen 32 der unteren Bearbeitungseinheit in Eingriff stehen.

Die Eingriffsvorsprünge 82 und die Eingriffsvertiefungen 32 tragen auch zur Kopplung in vertikaler Richtung bei. Dies kann durch einen verriegelnden Eingriff von Hintergreifbestandteilen der Eingriffsvorsprünge 82 und/oder Eingriffsvertiefungen 32 erfolgen, wie dies beispielsweise in der EP2315701B1 im Detail beschrieben ist. Beispielsweise kann die zweite Eingriffsvertiefung 34 einen hinterschnittenen Querschnitt aufweisen und die entsprechenden, in die zweite Eingriffsvertiefung 34 greifenden Eingriffsvorsprünge 82 können einen entsprechend profilierten, beispielsweise keilförmig profilierten Hintergreifabschnitt aufweisen.

Das Oberteil 16 der Stützstruktur 2 ist als haubenförmige Abdeckung ausgebildet. In dem in der Figur 1 gezeigten Zustand deckt das Oberteil 16 die Werkzeug-Auflageplatte 4 beispielsweise vollständig ab. Das Oberteil 16 umfasst eine sich in vertikaler Richtung über die Werkstück-Auflageplatte 4 nach oben erstreckende Rahmenstruktur 17. Der horizontale Querschnitt des Oberteils 16 bzw. der Rahmenstruktur 17 weist im Wesentlichen die gleiche Außenkontur wie der horizontale Querschnitt des Unterteils 3 auf. Das Oberteil 16 ist fluchtend zu dem Unterteil 3 angeordnet, so dass es zusammen mit dem Unterteil 3 die kastenförmige Stützstruktur 2 bildet.

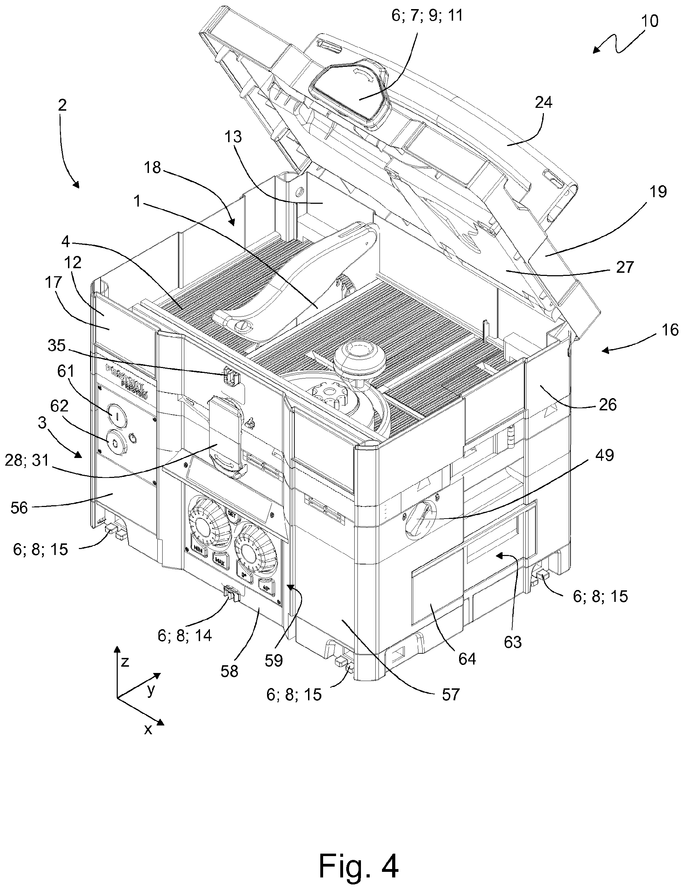

Wie in der Figur 4 gezeigt, weist die Rahmenstruktur 17 im Wesentlichen die Form einer Quadermantelfläche auf; d.h. die Rahmenstruktur 17 weist vier orthogonal zueinander ausgerichtete Umfangswände auf und verfügt über eine offene Unterseite und eine offene Oberseite. Die Rahmenstruktur 17 und die Werkzeug-Auflagefläche 4 begrenzen zusammen einen Stauraum 18.

Das Oberteil 16 weist einen Deckel 19 auf, der der offenen Oberseite der Rahmenstruktur 17 zugeordnet ist. Der Deckel 19 kann in eine Schließstellung versetzt werden, um das Oberteil 16 zu verschließen, wie dies in den Figuren 1 bis 3 und 5 gezeigt ist, oder in eine Offenstellung, um das Oberteil zu öffnen und den Zugang zu dem Stauraum 18 freizugeben, wie dies in Figur 4 gezeigt ist. Der Deckel 19 ist im Bereich der Rückwand 13 verschwenkbar an der Rahmenstruktur 17 angelenkt. Der Deckel 19 sitzt komplett auf der Rahmenstruktur 17 auf. Die Außenkontur des horizontalen Querschnitts des Deckels 19 entspricht der Außenkontur des horizontalen Querschnitts der Rahmenstruktur 17. Die obere Außenfläche des Deckels 19 stellt die Oberseite der Stützstruktur 2 dar.

Das vorstehend bereits erwähnte, exemplarisch als Drehriegel 11 ausgebildete Verriegelungselement 9 ist an dem Deckel 19 angelagert.

In der diskutierten Ausführungsform dient das Verriegelungselement 9 nicht nur dazu, eine vertikal zugfeste Kopplung zwischen der Stützstruktur 2 und einem auf die Stützstruktur 2 aufgesetzten Stapelelement bereitzustellen, sondern darüber hinaus auch dazu, den Deckel 19 so zu verriegeln, dass er nicht in die Offenstellung versetzt werden kann. Zu diesem Zweck ist das Verriegelungselement 9 als T-förmiger Drehriegel 11 ausgebildet, der wenigstens in drei verschiedene Stellungen versetzt werden kann.

Die Figur 4 zeigt eine erste Stellung des Drehriegels 11, in der der T-förmige Drehriegel 11 nicht in Kopplungseingriff mit einer unterhalb des Drehriegels 11 an der Rahmenstruktur 17 angeordneten Verriegelungsankerkontur 35 steht. In dieser Stellung kann der Deckel 19 geöffnet werden. Ferner kann in dieser Stellung eine Kopplung zu einem auf die transportable Bearbeitungseinheit 10 aufgesetzten (in der Figur 4 nicht gezeigten) Stapelelement bereitgestellt werden.

Die Figur 2 zeigt eine zweite Stellung des Drehriegels 11, in der der Drehriegel 11 in Kopplungseingriff mit der an der Rahmenstruktur 17 angeordneten Verriegelungsankerkontur 35 steht, nicht jedoch in Kopplungseingriff mit einem (in der Figur 2 nicht gezeigten) Stapelelement, wenn dieses auf die transportable Bearbeitungseinheit 10 aufgesetzt ist. In der zweiten Stellung ist der Deckel 19 verriegelt und ein auf die transportable Bearbeitungseinheit 10 aufgesetztes Stapelelement ist entkoppelt und kann abgenommen werden.

Die Figur 5 zeigt eine dritte Stellung des Drehriegels 11, in der der Drehriegel 11 gleichzeitig in Kopplungseingriff mit der an der Rahmenstruktur 17 vorgesehenen Verriegelungsankerkontur 35 und mit einer an einem aufgesetzten Stapelelement (hier der kastenförmige Behälter 21) vorgesehenen Verriegelungsankerkontur steht. In der dritten Stellung ist der Deckel 19 verriegelt und ein auf die transportable Bearbeitungseinheit 10 aufgesetztes Stapelelement (hier der kastenförmige Behälter 21) ist an diese gekoppelt.

Am Deckel 19 ist ferner ein Tragegriff 24 vorgesehen. Im gezeigten Beispiel ist der Tragegriff 24 an der Oberseite des Deckels 19 angeordnet. Der Tragegriff 24 ist in vorteilhafter Weise so ausgebildet, dass er wahlweise eine an die Oberseite des Deckels 19 herangeschwenkte Nichtgebrauchsstellung einnehmen kann oder eine nach oben geschwenkte und folglich nach oben über die Oberseite hinausragende Gebrauchsstellung einnehmen kann. Es handelt sich vorzugsweise um einen bügelförmigen Tragegriff mit U-förmiger Gestalt.

Die Stützstruktur 2 ist derart ausgebildet, dass sich die transportable Bearbeitungseinheit 10 mit dem Tragegriff 24 tragen lässt. Insbesondere ist das Oberteil 16 vertikal zugfest an das Unterteil 3 gekoppelt, so dass bei einem Anheben des Oberteils 16 mit Hilfe des Tragegriffs 24 auch das Unterteil 3 mitangehoben wird und stabil an dem Oberteil 16 verbleibt. Im gezeigten Beispiel kann insbesondere der Deckel 19 vertikal zugfest an die Rahmenstruktur 17 angekoppelt werden, und die Rahmenstruktur 17 kann vertikal zugfest an das Unterteil 3 angekoppelt werden. Zweckmäßigerweise ist die Rahmenstruktur 17 in sämtliche Raumrichtungen zugfest an das Unterteil 3 angekoppelt, und/oder der Deckel 19 in sämtliche Raumrichtungen zugfest an die Rahmenstruktur 17 angekoppelt.

Auf der Unterseite des Deckels 19 befindet sich eine Aufbewahrungsanordnung 27 zur Aufbewahrung eines Ersatzwerkzeugs, wie beispielsweise eines Ersatzsägeblatts. Alternativ oder zusätzlich dazu kann auch eine Aufbewahrungsanordnung für Zubehör, wie beispielsweise eine Aufbewahrungsanordnung für einen Spaltkeil auf der Unterseite des Deckels 19 vorgesehen sein. Im gezeigten Beispiel weist die Aufbewahrungsanordnung 27 eine flache rechteckige Grundgestalt auf und ist in der Nähe der Rückwand 13 an die Unterseite des Deckels 19 verschwenkbar angelenkt.

Wie in den Figuren 2 bis 4 gezeigt, ist das exemplarisch als Sägeblatt ausgebildete Werkzeug 1 teilweise oberhalb der Werkstück-Auflageplatte 4 angeordnet. Das Werkzeug 1 greift durch eine Öffnung der Werkstück-Auflageplatte 4 hindurch, so dass sich ein Teil des Werkzeugs 1 oberhalb der Werkstück-Auflageplatte 4 befindet. Unterhalb der Werkstück-Auflageplatte 4 ist das Werkzeug 1 an der Antriebseinrichtung 5 angebracht oder mit dieser gekoppelt, so dass es von der Antriebseinrichtung 5 angetrieben werden kann.

Die Rahmenstruktur 17 erstreckt sich in vertikaler Richtung nach oben über das an der Antriebseinrichtung 5 angebrachte Werkzeug 1 hinaus. Auf diese Weise kann das Werkzeug 1 an der Antriebseinrichtung 5 verbleiben, auch wenn die transportable Bearbeitungseinheit 10 in einem Stapel angeordnet ist, und der Deckel 19 geschlossen ist.

Das Oberteil 16 verfügt über Oberteil-Kopplungsmittel 28 und das Unterteil 3 verfügt über Unterteil-Kopplungsmittel 29. Mit Hilfe der Oberteil-Kopplungsmittel 28 und der Unterteil-Kopplungsmittel 29 kann das Oberteil 16 lösbar, vertikal zugfest an das Unterteil 3 angekoppelt werden. Insbesondere können die Oberteil-Kopplungsmittel 28 und die Unterteil-Kopplungsmittel 29 dabei eine Scharnieranordnung bilden.

In den Figuren umfassen die Oberteil-Kopplungsmittel 28 exemplarisch ein an der Vorderseite 12 der Stützstruktur 2 angebrachtes, beispielhaft als Drehriegel ausgebildetes beweglich gelagertes Verriegelungselement 31. Der Drehriegel ist drehbar um eine orthogonal zur Vorderwand 12 ausgerichtete Drehachse gelagert. Exemplarisch ist der Drehriegel im Wesentlichen rechteckig ausgebildet und parallel zu der Vorderwand 12 angeordnet. Die Oberteil-Kopplungsmittel 28 umfassen ferner exemplarisch zwei an der Rückwand 13 angelenkte Laschen 36. Die Laschen 36 weisen beispielsweise jeweils einen senkrecht zur Querrichtung ausgerichteten, flachen rechteckigen Grundkörper 37 auf, an dessen unterer Kante parallel zur Längsrichtung ausgerichtete Lagerfortsätze 38 vorgesehen sind.

Die Unterteil-Kopplungsmittel 29 umfassen exemplarisch eine Verriegelungsankerkontur 39 an der Vorderwand 12 an dem Unterteil 3. Die Verriegelungsankerkontur 39 steht senkrecht von der Vorderwand 12 ab und ist derart angeordnet, dass in einem Zustand, in dem das Oberteil 16 auf dem Unterteil 3 aufgesetzt ist, das Verriegelungselement 31 bei Einnahme einer Koppelstellung in Kopplungseingriff mit der Verriegelungsankerkontur 39 gebracht werden kann.

Die Unterteil-Kopplungsmittel 28 umfassen ferner Aufnahmeanordnungen 41 an dem Unterteil 3. Die Aufnahmeanordnungen 41 sind an der Rückwand 13 der Stützstruktur 2 angeordnet. Die Aufnahmeanordnungen 41 sind derart ausgebildet, dass die Lagerfortsätze 38 zur Ankopplung des Oberteils 16 an das Unterteil 3 in die Aufnahmeanordnungen 41 eingehängt werden können. Mittels der Laschen 36 und der Aufnahmeanordnungen 41 kann so eine Scharnieranordnung mit zwei in Vertikalrichtung z voneinander beabstandeten und in Längsrichtung x ausgerichteten Schwenkachsen gebildet werden. Mit der Scharnieranordnung kann das Oberteil 16 zumindest im Bereich der Rückwand 13 vertikal zugfest an das Unterteil 3 gekoppelt werden.

Wie vorstehend bereits erwähnt, greift das exemplarisch als Sägeblatt ausgebildete Werkzeug 1 durch eine in der Werkstück-Auflageplatte 4 vorgesehene Öffnung hindurch. Das Sägeblatt ist parallel zur Querrichtung bzw. parallel zu den Seitenwänden 25, 26 der Stützstruktur 2 ausgerichtet. Das Sägeblatt wird von einer Schutzhaube 42 abgedeckt. Die Schutzhaube 42 ist an einem Spaltkeil 43 befestigt, der durch die Öffnung hindurchgreift und an einer unterhalb der Werkstück-Auflageplatte 4 angeordneten Befestigungseinrichtung 44 befestigt ist. Sägeblatt und/oder Spaltkeil 42 sind vorzugsweise durch eine in der Rückwand 13 an dem Unterteil 3 vorgesehenen Öffnung 46 zugänglich und können beispielsweise unter Verwendung eines Schnellspannsystems 45 ausgetauscht werden.

Die Oberseite der Werkstück-Auflageplatte 4 ist im gezeigten Beispiel mit Rillen versehen. Alternativ dazu kann die Oberseite der Werkstück-Auflageplatte 4 auch ohne Rillen bzw. eben oder mit einer anderen Strukturierung versehen sein.

Das Sägeblatt liegt auf einer in Querrichtung y verlaufenden, gedachten Linie, die die Werkstück-Auflageplatte 4 in Längsrichtung in zwei Plattenabschnitte 47 und 48 unterteilt. Das Sägeblatt ist vorzugsweise in Längsrichtung außermittig zur Werkstück-Auflageplatte 4 angeordnet, so dass der zweite Plattenabschnitt 48 länger ist als der erste Plattenabschnitt 47. Beispielsweise kann der zweite Plattenabschnitt 48 in Längsrichtung in etwa doppelt so lang wie der erste Plattenabschnitt 47 sein. Vorzugsweise ist der erste Plattenabschnitt 47 relativ zum Werkzeug 1 fixiert, während der zweite Plattenabschnitt 48 zumindest in Querrichtung y verschiebbar gelagert ist, so dass er relativ zum Werkzeug 1 in Querrichtung y verschoben werden kann. Mit dem verschiebbar gelagerten zweiten Plattenabschnitt 48 kann ein Werkstück bei der Verarbeitung relativ zum Werkzeug 1 geführt bzw. bewegt werden. Anhand einer nicht gezeigten Arretiereinrichtung kann der zweite Plattenabschnitt 48 relativ zum Werkzeug 1 bzw. zum Unterteil 3 fixiert werden. Die Fixierung lässt sich beispielsweise über einen an der Seitenwand 26 an dem Unterteil 3 vorgesehenen Drehknopf 49 einstellen.

Der zweite Plattenabschnitt 48 kann insbesondere in einer Transportstellung fixiert werden, in der er fluchtend zu dem Unterteil 3 bzw. dem Oberteil 16 angeordnet ist. In den Figuren ist der zweite Plattenabschnitt 48 in der Transportstellung gezeigt. Insbesondere weist in der Transportstellung der horizontale Querschnitt der Werkstück-Auflageplatte 4 im Wesentlichen die gleiche Außenkontur auf wie der horizontale Querschnitt des Unterteils 3 und/oder des Oberteils 16.

Im zweiten Plattenabschnitt 48 ist eine Nutenanordnung 51 vorgesehen, in der eine Anschlageinrichtung 52 geführt werden kann. Die Anschlageinrichtung 52 ist beispielsweise als Winkelanschlag ausgebildet und umfasst insbesondere ein in der Nutenanordnung 51 führbares Befestigungselement 53, ein relativ zum Befestigungselement 53 verschwenkbares Winkelelement 54 und eine am Winkelelement 54 angebrachte Führungsschiene 55. Die Anschlageinrichtung 52 ist derart dimensioniert, dass sie in den Stauraum 18 passt, insbesondere in einem Zustand, in dem die Anschlageinrichtung 52 in der Nutenanordnung 51 geführt ist.

Die Vorderwand 12 der Stützstruktur 2 weist in Längsrichtung x zwei seitliche Wandabschnitte 56 und 57 sowie einen mittleren Wandabschnitt 58 auf, der gegenüber den seitlichen Wandabschnitten 56, 57 nach hinten versetzt ist - also in Querrichtung y hin zu der Rückwand 13 - so dass die Vorderwand 12 in Längsrichtung x mittig eine Vertiefung in Querrichtung y aufweist. Im gezeigten Beispiel erstreckt sich die Vertiefung über den gesamten Vertikalbereich der Vorderwand 12 von der Unterseite der Stützstruktur 2 bis zur Oberseite und damit über das Unterteil 3 und das Oberteil 16. Die vorstehend diskutierten Verriegelungselemente 11, 31 sowie die Verriegelungsankerkonturen 14, 35, 39 sind vorzugsweise an dem mittleren Wandabschnitt 58 bzw. in der diskutierten Vertiefung vorgesehen, so wie dies in den Figuren gezeigt ist.

An dem mittleren Wandabschnitt 58 ist ferner eine Bedieneinrichtung 59 vorgesehen. Die Bedieneinrichtung 59 ist an dem Unterteil 3 angeordnet und weist vorzugsweise Drehräder 102, 104 und/oder Tasten 105, 106, 107, 108 zum Einstellen von Parametern für des Betrieb der transportablen Bearbeitungseinheit 10 auf. Handelt es sich wie in dem gezeigten Beispiel bei der transportablen Bearbeitungseinheit 10 um eine Tischkreissäge, so kann anhand der Bedieneinrichtung 59 beispielsweise eine Höhenverstellung und/oder eine Winkelverstellung des Sägeblatts vorgenommen werden. Die Bedieneinrichtung 59 ist insbesondere derart dimensioniert, dass sie in Querrichtung nicht über die seitlichen Wandabschnitte 56, 57 hinausragt.

An der Vorderwand 12 ist eine Schalteinrichtung mit einem Einschaltknopf 61 sowie einem Ausschaltknopf 62 vorgesehen. Im gezeigten Beispiel ist die Schalteinrichtung an dem seitlichen Wandabschnitt 56 vorgesehen. Die Schalteinrichtung ist am Unterteil 3 angeordnet. Der Ausschaltknopf 62 kann vorzugsweise in zwei verschiedene Stellungen versetzt werden - eine Transportstellung, in der der Ausschaltknopf 62 in der Vorderwand 12 versenkt ist bzw. bündig zur Vorderwand 12 angeordnet ist, und eine (in den Figuren nicht gezeigte) Notausstellung, in der der Ausschaltknopf 62 sich von der Vorderwand 12 in Querrichtung nach vorne erstreckt bzw. von der Vorderwand in Querrichtung absteht. In der Notausstellung kann der Ausschaltknopf 62 besonders leicht gefunden und betätigt werden und somit als Notaus-Schalter dienen. Folglich muss kein zusätzlicher, dedizierter Notaus-Schalter vorgesehen sein. Die Schalteinrichtung ist insbesondere derart ausgebildet, dass der Ausschaltknopf 62 bei Drücken des Einschaltknopfs 61 die Notausstellung einnimmt. Die Schalteinrichtung 62 ist ferner zweckmäßigerweise derart ausgebildet, dass der Ausschaltknopf 62 durch starkes Drücken in die Transportstellung versetzt werden kann, und bei starkem oder leichtem Drücken ein Abschalten der transportablen Bearbeitungseinheit 10 bzw. deren Antriebseinrichtung 5 bewirkt.

An der Seitenwand 26 mündet im Unterteil 3 eine Aufnahmekammer 63 aus, in der ein Auffangbehälter 64 angeordnet ist. Durch eine (in den Figuren nicht gezeigte) Rohranordnung kann am Werkzeug 1 erzeugter Staub bzw. vom Werkstück abgetragenes Material in den Auffangbehälter 64 geleitet werden. Dadurch, dass der Auffangbehälter 64 direkt von außen zugänglich ist, kann er besonders einfach geleert werden.

In der Figur 5 ist beispielhaft gezeigt, wie die transportable Bearbeitungseinheit 10 in einem Stapel mit zwei weiteren kastenförmigen Körpern 21, 22 angeordnet ist.

Die in der Figur 5 gezeigte Stapelanordnung 20 umfasst die vorstehend diskutierte transportable Bearbeitungseinheit 10, einen oberen kastenförmigen Körper 21, der auf der transportablen Bearbeitungseinheit 10 angeordnet ist, sowie einen unteren kastenförmigen Körper 22, der unter der transportablen Bearbeitungseinheit 10 angeordnet ist. Die beiden kastenförmigen Körper 21, 22 sind in der Figur 5 exemplarisch als kastenförmige Behälter ausgebildet. Alternativ dazu kann auch jeder der kastenförmigen Körper 21, 22 als eine weitere Bearbeitungseinheit 10 ausgeführt sein.

Die beiden kastenförmigen Körper 21, 22 bilden zusammen mit der transportablen Bearbeitungseinheit 10 einen vertikalen Stapel. Die kastenförmigen Körper 21, 22 weisen Körper-Kopplungsmittel 23 auf, die mit den Stützstruktur-Kopplungsmitteln 6 zusammenwirken, um eine lösbare, vertikal zugefeste Kopplung zwischen den kastenförmigen Körpern 21, 22 und der transportablen Bearbeitungseinheit 10 bereitzustellen.

Der horizontale Querschnitt der transportablen Bearbeitungseinheit 10 weist im Wesentlichen die gleiche Außenkontur wie der horizontale Querschnitt der kastenförmigen Körper 21, 22 auf. Die transportable Bearbeitungseinheit 10 ist fluchtend zu den kastenförmigen Körpern 21, 22 angeordnet, so dass die transportable Bearbeitungseinheit 10 und die kastenförmigen Körper 21, 22 zusammen einen im Wesentlichen quaderförmigen Stapel bilden.

Die Körper-Kopplungsmittel 23 können identisch zu den Stützstruktur-Kopplungsmitteln 6 ausgebildet sein. Die Kopplung zwischen den Körper-Kopplungsmitteln 23 und den Stützstruktur-Kopplungsmitteln 6 kann dann in gleicher Weise erfolgen wie die vorstehend beschriebene Kopplung zwischen Stützstruktur-Kopplungsmitteln 6 zweier transportabler Bearbeitungseinheiten 10.

Insbesondere umfassen die Körper-Kopplungsmittel 23 ein vorzugsweise als Drehriegel ausgebildetes Verriegelungselement 65, eine Verriegelungsankerkontur 66, sowie Eingriffsstrukturen 67.

In der Figur 5 steht die Verriegelungsankerkontur 66 des oberen, auf die transportable Bearbeitungseinheit 10 aufgesetzten kastenförmigen Körpers 21 in Kopplungseingriff mit dem Verriegelungselement 9 der transportablen Bearbeitungseinheit 10. Das Verriegelungselement 9 der transportablen Bearbeitungseinheit 10 steht ferner in Kopplungseingriff mit der Verriegelungsankerkontur 35 der transportablen Bearbeitungseinheit 10. Das an dem Oberteil 16 vorgesehene Verriegelungselement 31 steht in Kopplungseingriff mit der an dem Unterteil 3 vorgesehenen Verriegelungsankerkontur 39. Die Verriegelungsankerkontur 14 der transportablen Bearbeitungseinheit 10 steht in Kopplungseingriff mit dem Verriegelungselement 65 des unteren kastenförmigen Körpers 22.

Ferner tragen bei der exemplarischen Stapelanordnung 20 die vorstehend bereits beschriebenen Eingriffsstrukturen zur Kopplung zwischen der transportablen Bearbeitungseinheit 10 und den kastenförmigen Körpern 21, 22 bei. Insbesondere weist der obere kastenförmige Körper 21 an seiner Unterseite Eingriffsvorsprünge auf, die den vorstehend diskutierten Eingriffsvorsprüngen 82 der transportablen Bearbeitungseinheit 10 entsprechen und die in die Eingriffsvertiefungen 32 der transportablen Bearbeitungseinheit 10 greifen. Ferner weist der untere kastenförmige Körper 22 an seiner Oberseite Eingriffsvertiefungen auf, die den vorstehend diskutierten Eingriffsvertiefungen 32 der transportablen Bearbeitungseinheit 10 entsprechen und die mit den Eingriffsvorsprüngen 82 der transportablen Bearbeitungseinheit 10 in Eingriff stehen.

Die Figur 7 zeigt ein schematisches Blockdiagramm einer Steuereinrichtung 101, die in der transportablen Bearbeitungseinheit 10 integriert sein kann.

Die Steuereinrichtung 101 umfasst die vorstehend diskutierte Bedieneinrichtung 59 und die Antriebseinrichtung 5, sowie eine Steuereinheit 112 und eine elektrische Stelleinrichtung 103. Ferner kann die Steuereinrichtung 101 den vorstehend diskutierten Einschaltknopf 61 und den Ausschaltknopf 62 umfassen.

Die Bedieneinrichtung 59 umfasst eine Vielzahl an Bedienelementen. Exemplarisch umfasst die Bedieneinrichtung 59 ein erstes Drehrad 102 und ein zweites Drehrad 104. Darüber hinaus umfasst die Bedieneinrichtung 59 exemplarisch Schnellwahltasten 105, 106, 107 und 108, eine Kalibrationstaste 109 und eine Anzeige 111.

Die Steuereinheit 112 ist beispielsweise als Mikrocontroller ausgebildet. Die Bedieneinrichtung 59 bzw. deren Bedienelemente sind an die Steuereinheit 112 angeschlossen. Ferner sind exemplarisch auch die Antriebseinrichtung 5 und die elektrische Stelleinrichtung 103 an die Steuereinheit 112 angeschlossen. Zudem können auch der Einschaltknopf 61 und der Ausschaltknopf 62 an der Steuereinheit 112 angeschlossen sein.

Die elektrische Stelleinrichtung 103 umfasst exemplarisch einen Linearantrieb 114 und einen Schwenkantrieb 115, die ausgebildet sind, das Werkzeug 1 gemäß einer Ansteuerung durch die Steuereinheit 112 relativ zur Werkstück-Auflageplatte 4 zu positionieren. Die Position des Werkzeugs 1 kann beispielsweise über die Drehräder 102, 104 und/oder die Schnellwahltasten 105, 106, 107 und 108 eingestellt werden.

Die Antriebseinrichtung 5 ist beispielsweise als Elektromotor, insbesondere als Drehantrieb, ausgebildet und dient dem maschinellen Antrieb des Werkzeugs 1. Die Antriebseinrichtung 5 ist an dem Unterteil 3 betriebsbereit befestigt, so dass die Antriebseinrichtung 5 bei der Bearbeitung des Werkstücks 1 durch das von der Antriebseinrichtung 5 angetriebene Werkzeug 1 im Unterteil 3 verbleibt. Der Antrieb des Werkzeugs 1 durch die Antriebseinrichtung kann beispielsweise durch Betätigung des Einschaltknopfs 61 gestartet und durch Betätigung des Ausschaltknopfs 62 gestoppt werden.

## Patentansprüche

1. Stapelanordnung (20), umfassend eine transportable Bearbeitungseinheit (10), insbesondere eine Tischkreissäge, zur Bearbeitung eines Werkstücks mit einem Werkzeug (1), sowie mindestens einen kastenförmigen Körper (21, 22), der auf oder unter der transportablen Bearbeitungseinheit (10) angeordnet ist, um zusammen mit der transportablen Bearbeitungseinheit (10) einen vertikalen Stapel zu bilden, wobei die transportable Bearbeitungseinheit (10) eine auf einer Unterlage abstellbare kastenförmige Stützstruktur (2) mit einem Unterteil (3) umfasst, das über eine zum Auflegen des zu bearbeitenden Werkstücks nutzbare Werkstück-Auflageplatte (4) verfügt, sowie eine Antriebseinrichtung (5) zum maschinellen Antrieb des Werkzeugs (1), die zumindest teilweise in dem Unterteil (3) angeordnet und daran betriebsbereit befestigt ist, so dass die Antriebseinrichtung (5) bei der Bearbeitung des Werkstücks durch das von der Antriebseinrichtung (5) angetriebene Werkzeug (1) zumindest teilweise in dem Unterteil (3) verbleibt, wobei die Stützstruktur (2) über Stützstruktur-Kopplungsmittel (6) verfügt, die eine lösbare, vertikal zugfeste Kopplung mit dem wenigstens einen kastenförmigen Körper (21; 22) bereitstellen, wobei der kastenförmige Körper (21, 22) Körper-Kopplungsmittel (23) aufweist, die mit den Stützstruktur-Kopplungsmitteln (6) zusammenwirken, um die lösbare, vertikal zugfeste Kopplung zwischen dem kastenförmigen Körper (21; 22) und der transportablen Bearbeitungseinheit (10) bereitzustellen.

2. Stapelanordnung (20) nach Anspruch 1, wobei die Stützstruktur-Kopplungsmittel (6) obere Stützstruktur-Kopplungsmittel umfassen (7), die dazu geeignet sind, in einem Zustand, in dem der kastenförmige Körper (21) auf die transportable Bearbeitungseinheit (10) gestapelt ist, eine lösbare, vertikal zugfeste Kopplung mit dem kastenförmigen Körper (21) bereitzustellen, und/oder die Stützstruktur-Kopplungsmittel (6) untere Stützstruktur-Kopplungsmittel (8) umfassen, die dazu geeignet sind, in einem Zustand, in dem die transportable Bearbeitungseinheit (10) auf den kastenförmigen Körper (22) gestapelt ist, eine lösbare, vertikal zugefeste Kopplung mit dem kastenförmigen Körper (22) bereitzustellen.

3. Stapelanordnung (20) nach einem der voranstehenden Ansprüche, wobei die Stützstruktur-Kopplungsmittel (6), vorzugsweise die oberen Stützstruktur-Kopplungsmittel (7), ein beweglich gelagertes Verriegelungselement (9) umfassen, das insbesondere einen an der Stützstruktur (2) drehbar gelagerten Drehriegel (11) umfasst, wobei die Drehachse orthogonal zu derjenigen Umfangswand (12) der Stützstruktur (2) verläuft, an der der Drehriegel angeordnet ist.

4. Stapelanordnung (20) nach einem der voranstehenden Ansprüche, wobei die Stützstruktur-Kopplungsmittel (6), vorzugsweise die unteren Stützstruktur-Kopplungsmittel (7), wenigstens eine an der Stützstruktur (2) ortsfest angeordnete Verriegelungsankerkontur (14; 15) umfassen.

5. Stapelanordnung (20) nach einem der voranstehenden Ansprüche, wobei die Stützstruktur (2) ein abnehmbar an dem Unterteil (3) angebrachtes Oberteil (16) mit einer sich in vertikaler Richtung über die Werkstück-Auflageplatte (4) nach oben erstreckenden Rahmenstruktur (17) umfasst.

6. Stapelanordnung (20) nach Anspruch 5, wobei der horizontale Querschnitt des Oberteils (16), vorzugsweise der horizontale Querschnitt der Rahmenstruktur (17), im Wesentlichen die gleiche Außenkontur wie der horizontale Querschnitt des Unterteils (3) aufweist.

7. Stapelanordnung (20) nach Anspruch 5 oder 6, wobei das Werkzeug (1) an der Antriebseinrichtung (5) angebracht und zumindest teilweise oberhalb der Werkstück-Auflageplatte (4) angeordnet ist und sich die Rahmenstruktur (17) in vertikaler Richtung nach oben über das an der Antriebseinrichtung (5) angebrachte Werkzeug (1) hinaus erstreckt.

8. Stapelanordnung (20) nach einem der Ansprüche 5 bis 7, wobei die oberen Stützstruktur-Kopplungsmittel (7) an dem Oberteil (16) vorgesehen sind und/oder die unteren Stützstruktur-Kopplungsmittel (8) an dem Unterteil (3) vorgesehen sind.

9. Stapelanordnung (20) nach einem der Ansprüche 5 bis 8, wobei das Oberteil (3) als haubenförmige Abdeckung ausgebildet ist, das in einem an der Stützstruktur (2) angebrachten Zustand die Werkzeug-Auflageplatte (4) abdeckt.

10. Stapelanordnung (20) nach einem der Ansprüche 5 bis 9, wobei die Rahmenstruktur (17) und die Werkzeug-Auflagefläche (4) zusammen einen Stauraum (18) begrenzen und das Oberteil (16) über einen abnehmbaren und/oder verschwenkbaren Deckel (19) verfügt, der an der Rahmenstruktur (17) angebracht ist und der in einer Offenstellung einen Zugang zu dem Stauraum (18) freigibt.

11. Stapelanordnung (20) nach einem der voranstehenden Ansprüche, wobei die transportable Bearbeitungseinheit (10) einen Tragegriff (24) umfasst, der an der Stützstruktur (2), vorzugsweise am Oberteil (16), insbesondere am Deckel (19), vorgesehen ist, wobei die Stützstruktur (2) derart ausgebildet ist, dass sich die transportable Bearbeitungseinheit (10) mit dem Tragegriff (24) tragen lässt.

12. Stapelanordnung (20) nach einem voranstehenden Anspruch, wobei der kastenförmige Körper (21; 22) ein Behälter oder eine weitere Bearbeitungseinheit (10) ist, die gemäß der transportablen Bearbeitungseinheit (10) ausgebildet ist.

13. Stapelanordnung (20) nach einem voranstehenden Anspruch, wobei der horizontale Querschnitt der transportablen Bearbeitungseinheit (10) im Wesentlichen die gleiche Außenkontur wie der horizontale Querschnitt des kastenförmige Körpers (21; 22) aufweist und die transportable Bearbeitungseinheit (10) fluchtend zu dem kastenförmigen Körper (21; 22) angeordnet ist, so dass die transportable Bearbeitungseinheit (10) und der kastenförmige Körper (21; 22) zusammen einen im Wesentlichen quaderförmigen Stapel bilden.

14. Stapelanordnung (20) nach einem voranstehenden Anspruch, wobei der kastenförmige Körper ein oberer kastenförmiger Behälter ist, der auf der transportablen Bearbeitungseinheit (10) angeordnet ist, und die Stapelanordnung (20) ferner einen unteren kastenförmigen Behälter umfasst, der unter der transportablen Bearbeitungseinheit (10) angeordnet ist, wobei die beiden kastenförmigen Behälter zusammen mit der transportablen Bearbeitungseinheit (10) einen vertikalen Stapel bilden und Körper-Kopplungsmittel (23) aufweisen, die mit den Stützstruktur-Kopplungsmitteln (6) zusammenwirken, um eine lösbare, vertikal zugfeste Kopplung zwischen den kastenförmigen Behältern und der transportablen Bearbeitungseinheit (10) bereitzustellen.

15. Stapelanordnung (20) nach Anspruch 14, wobei die beiden kastenförmigen Behälter als Systemkisten, insbesondere als modulare Werkzeugkästen zur Aufbewahrung von handgeführtem Elektrowerkzeug, Zubehör und/oder Verbrauchmaterialen, ausgebildet sind.

## Claims

1. Stack arrangement (20), comprising a transportable machining unit (10), in particular a circular table saw, for machining a workpiece with a tool (1), and at least one box-shaped body (21, 22) arranged on or below the transportable machining unit (10) to form a vertical stack together with the transportable machining unit (10), wherein the transportable machining unit (10) comprises a box-shaped support structure (2) which can be placed on a support and has a lower part (3) which has a workpiece support plate (4) which can be used to support the workpiece to be machined, and a drive unit (5) for mechanically driving the tool (1), which drive unit (5) is arranged at least partially in the lower part (3) and is fastened thereto ready for operation, so that the drive unit (5) remains at least partially in the lower part (3) during machining of the workpiece by the tool (1) driven by the drive unit (5), wherein the support structure (2) has support structure coupling means (6) which provide a releasable, vertically tension-proof coupling with the at least one box-shaped body (21; 22), wherein the box-shaped body (21, 22) has body coupling means (23) cooperating with the support structure coupling means (6) to provide the releasable, vertically tension-proof coupling between the box-shaped body (21; 22) and the transportable machining unit (10) .

2. Stack arrangement (20) according to claim 1, wherein the support structure coupling means (6) comprise upper support structure coupling means (7) for providing, in a state in which the box-shaped body (21) is stacked on the transportable machining unit (10), a releasable vertically tension-proof coupling with the box-shaped body (21), and/or the support structure coupling means (6) comprise lower support structure coupling means (8) for providing, in a state in which the transportable machining unit (10) is stacked on the box-shaped body (22), a releasable vertically tension-proof coupling with the box-shaped body (22).

3. Stack arrangement (20) according to any one of the preceding claims, wherein the support structure coupling means (6), preferably the upper support structure coupling means (7), comprise a movably mounted locking element (9), in particular comprising a rotary latch (11) rotatably mounted on the support structure (2), wherein the axis of rotation extends orthogonally with respect to the circumferential wall (12) of the support structure (2) on which the rotary latch is arranged.

4. Stack arrangement (20) according to any one of the preceding claims, wherein the support structure coupling means (6), preferably the lower support structure coupling means (7), include at least one locking anchor contour (14; 15) arranged non-movingly on the support structure (2).

5. Stack arrangement (20) according to any one of the preceding claims, wherein the support structure (2) comprises an upper part (16) removably attached to the lower part (3) and having a frame structure (17) extending vertically upwards over the workpiece support plate (4).

6. Stack arrangement (20) according to claim 5, wherein the horizontal cross-section of the upper part (16), preferably the horizontal cross-section of the frame structure (17), has substantially the same outer contour as the horizontal cross-section of the lower part (3).

7. Stack arrangement (20) according to claim 5 or 6, wherein the tool (1) is attached to the drive unit (5) and is arranged at least partially above the workpiece support plate (4), and the frame structure (17) extends vertically upwards beyond the tool (1) attached to the drive unit (5).

8. Stack arrangement (20) according to any one of claims 5 to 7, wherein the upper support structure coupling means (7) are provided on the upper part (16) and/or the lower support structure coupling means (8) are provided on the lower part (3) .

9. Stack arrangement (20) according to any one of claims 5 to 8, wherein the upper part (3) is designed as a hood-shaped cover which, in a state attached to the support structure (2), covers the workpiece support plate (4).

10. Stack arrangement (20) according to any one of claims 5 to 9, wherein the frame structure (17) and the workpiece support surface (4) together define a storage space (18) and the upper part (16) has a removable and/or pivotable cover (19) which is attached to the frame structure (17) and which, in an open position, gives access to the storage space (18).

11. Stack arrangement (20) according to any one of the preceding claims, wherein the transportable machining unit (10) comprises a carrying handle (24) which is provided on the support structure (2), preferably on the upper part (16), in particular on the cover (19), wherein the support structure (2) is designed such that the transportable machining unit (10) can be carried with the carrying handle (24) .

12. Stack arrangement (20) according to a preceding claim, wherein the box-shaped body (21; 22) is a container or a further machining unit (10) adapted according to the transportable machining unit (10).

13. Stack arrangement (20) according to a preceding claim, wherein the horizontal cross-section of the transportable machining unit (10) has substantially the same outer contour as the horizontal cross-section of the box-shaped body (21; 22) and the transportable machining unit (10) is aligned with the box-shaped body (21; 22) so that the transportable machining unit (10) and the box-shaped body (21; 22) together form a substantially cuboid stack.

14. Stack arrangement (20) according to a preceding claim, wherein the box-shaped body is an upper box-shaped container, which is arranged on the transportable machining unit (10), and the stack arrangement (20) further comprises a lower box-shaped container, which is arranged under the transportable machining unit (10), wherein both box-shaped containers form a vertical stack together with the transportable machining unit (10) and have body coupling means (23) which cooperate with the support structure coupling means (6) to provide a releasable, vertically tension-proof coupling between the box-shaped containers and the transportable machining unit (10) .

15. Stack arrangement (20) according to claim 14, wherein both box-shaped containers are adapted as system casings, in particular as modular tool boxes for storing handheld power tool, accessories and/or consumables.

## Revendications

1. Ensemble empilé (20), comprenant une unité d'usinage transportable (10), en particulier une scie circulaire à table, pour usiner une pièce avec un outil (1), ainsi qu'au moins un corps en forme de boîte (21, 22) qui est disposé sur ou sous l'unité d'usinage transportable (10) pour former un empilement vertical conjointement avec l'unité d'usinage transportable (10), dans lequel l'unité d'usinage transportable (10) comprend une structure de soutien (2) en forme de boîte pouvant être déposée sur un support, avec une partie inférieure (3) qui dispose d'une plaque de dépôt de pièce (4) pouvant être utilisée pour y déposer la pièce à usiner, ainsi un dispositif d'entraînement (5) pour entraîner mécaniquement l'outil (1) qui est disposé au moins en partie dans la partie inférieure (3) et y est fixé prêt à l'emploi de sorte que le dispositif d'entraînement (5) reste au moins en partie dans la partie inférieure (3) lors de l'usinage de la pièce par l'outil (1) entraîné par le dispositif d'entraînement (5), dans lequel la structure de soutien (2) dispose de moyens de couplage de structure de soutien (6) qui fournissent un couplage amovible résistant verticalement à la traction à l'au moins un corps en forme de boîte (21 ; 22), dans lequel le corps en forme de boîte (21, 22) présente des moyens de couplage de corps (23) qui coopèrent avec les moyens de couplage de structure de soutien (6) pour fournir le couplage amovible, résistant verticalement à la traction entre le corps en forme de boîte (21 ; 22) et l'unité d'usinage transportable (10).

2. Ensemble empilé (20) selon la revendication 1, dans lequel les moyens de couplage de structure de soutien (6) comprennent des moyens de couplage supérieurs de structure de soutien (7) qui sont adaptés pour fournir dans un état, dans lequel le corps en forme de boîte (21) est empilé sur l'unité d'usinage transportable (10), un couplage amovible résistant verticalement à la traction au corps en forme de boîte (21) et/ou les moyens de couplage de structure de soutien (6) comprennent des moyens de couplage inférieurs de structure de soutien (8) qui sont adaptés pour fournir un couplage amovible résistant verticalement à la traction au corps en forme de boîte (22) dans un état, dans lequel l'unité d'usinage transportable (10) est empilée sur le corps en forme de boîte (22).

3. Ensemble empilé (20) selon l'une quelconque des revendications précédentes, dans lequel les moyens de couplage de structure de soutien (6), de préférence les moyens de couplage supérieurs de structure de soutien (7), comprennent un élément de verrouillage (9) monté de manière mobile qui comprend en particulier un verrou rotatif (11) monté de manière à pouvoir tourner sur la structure de soutien (2), dans lequel l'axe de rotation s'étend de manière orthogonale par rapport à la paroi périphérique (12) de la structure de soutien (2), sur laquelle précisément le verrou rotatif est disposé.

4. Ensemble empilé (20) selon l'une quelconque des revendications précédentes, dans lequel les moyens de couplage de structure de soutien (6), de préférence les moyens de couplage inférieurs de structure de soutien (7), comprennent au moins un contour d'ancrage par verrouillage (14 ; 15) disposé de manière stationnaire sur la structure de soutien (2).

5. Ensemble empilé (20) selon l'une quelconque des revendications précédentes, dans lequel la structure de soutien (2) comprend une partie supérieure (16) installée de manière retirable sur la partie inférieure (3) avec une structure de cadre (17) s'étendant vers le haut au-dessus de la plaque de dépôt de pièce (4) dans une direction verticale.

6. Ensemble empilé (20) selon la revendication 5, dans lequel la section transversale horizontale de la partie supérieure (16), de préférence la section transversale horizontale de la structure de cadre (17), présente sensiblement le même contour extérieur que la section transversale horizontale de la partie inférieure (3).

7. Ensemble empilé (20) selon la revendication 5 ou 6, dans lequel l'outil (1) est installé sur le dispositif d'entraînement (5) et est disposé au moins en partie au-dessus de la plaque de dépôt de pièce (4) et la structure de cadre (17) s'étend dans une direction verticale vers le haut au-delà de l'outil (1) installé sur le dispositif d'entraînement (5).

8. Ensemble empilé (20) selon l'une quelconque des revendications 5 à 7, dans lequel les moyens de couplage supérieurs de structure de soutien (7) sont prévus sur la partie supérieure (16) et/ou les moyens de couplage inférieurs de structure de soutien (8) sont prévus sur la partie inférieure (3).

9. Ensemble empilé (20) selon l'une quelconque des revendications 5 à 8, dans lequel la partie supérieure (3) est réalisée en tant que recouvrement en forme de capot qui recouvre la plaque de dépôt d'outil (4), dans un état installé sur la structure de soutien (2).

10. Ensemble empilé (20) selon l'une quelconque des revendications 5 à 9, dans lequel la structure de cadre (17) et la surface de dépôt d'outil (4) délimitent conjointement un espace de rangement (18), et la partie supérieure (16) dispose d'un couvercle (19) retirable et/ou pivotant qui est installé sur la structure de cadre (17) et qui dégage un accès à l'espace de rangement (18) dans une position ouverte.

11. Ensemble empilé (20) selon l'une quelconque des revendications précédentes, dans lequel l'unité d'usinage transportable (10) comprend une poignée de transport (24) qui est prévue sur la structure de soutien (2), de préférence sur la partie supérieure (16), en particulier sur le couvercle (19), dans lequel la structure de soutien (2) est réalisée de telle manière que l'unité d'usinage transportable (10) peut être portée par la poignée de transport (24).

12. Ensemble empilé (20) selon l'une quelconque des revendications précédentes, dans lequel le corps en forme de boîte (21 ; 22) est un contenant ou une autre unité d'usinage (10) qui est réalisée selon l'unité d'usinage transportable (10).

13. Ensemble empilé (20) selon une revendication précédente, dans lequel la section transversale horizontale de l'unité d'usinage transportable (10) présente sensiblement le même contour extérieur que la section transversale horizontale du corps en forme de boîte (21 ; 22) et l'unité d'usinage transportable (10) est disposée de manière alignée par rapport au corps en forme de boîte (21 ; 22) de sorte que l'unité d'usinage transportable (10) et le corps en forme de boîte (21 ; 22) forment conjointement un empilement sensiblement de forme carrée.

14. Ensemble empilé (20) selon une revendication précédente, dans lequel le corps en forme de boîte est un contenant supérieur en forme de boîte, qui est disposé sur l'unité d'usinage transportable (10), et l'ensemble empilé (20) comprend en outre un contenant inférieur en forme de boîte, qui est disposé sous l'unité d'usinage transportable (10), dans lequel les deux contenants en forme de boîte forment un empilement vertical conjointement avec l'unité d'usinage transportable (10) et présentent des moyens de couplage de corps (23) qui coopèrent avec les moyens de couplage de structure de soutien (6) pour fournir un couplage amovible résistant verticalement à la traction entre les contenants en forme de boîte et l'unité d'usinage transportable (10).

15. Ensemble empilé (20) selon la revendication 14, dans lequel les deux contenants en forme de boîte sont réalisés en tant que caisses de système, en particulier en tant que caissons modulaires à outils destinés à conserver un outil électrique à guidage manuel, des accessoires et/ou des matériaux consommables.
